# EUROPÄISCHE PATENTSCHRIFT

(11) **EP 1 574 281 B1**
(45) Veröffentlichungstag und Bekanntmachung des Hinweises auf die Patenterteilung: **02.07.2008**
(21) Anmeldenummer: 05005331.3
(22) Anmeldetag: 11.03.2005
(51) Int. Cl.: B23P 19/04, F01L 3/10

(54) **Verfahren und Vorrichtung zum maschinellen Montieren von Ventiltriebteilen**
Method and device for automatically assembling valve drive parts
Procédé et dispositif de montage automatique des éléments d'entrainement des soupapes

(30) Priorität: 12.03.2004 DE 102004012608
(43) Veröffentlichungstag der Anmeldung: 14.09.2005
(73) Patentinhaber: ThyssenKrupp Krause GmbH, 28777 Bremen (DE)
(72) Erfinder: Gertjegerdes, Karl-Heinz, 26215 Wiefelstede (DE); Lew, Jurij, 28357 Bremen (DE)
(74) Vertreter: Möller, Friedrich

(56) Entgegenhaltungen:
- EP-A- 0 158 088
- EP-A- 1 232 831
- DE-A- 4 002 822
- DE-A- 10 230 241
- US-A- 3 239 925

## Beschreibung

Die Erfindung betrifft ein Verfahren zum maschinellen Montieren von Ventilkeilen, zwischen einem Ventilfederteller und einem Ventilschaft eines Ventils eines Verbrennungsmotors, gemäß dem Oberbegriff des Anspruchs 1. Des Weiteren betrifft die Erfindung eine entsprechende Vorrichtung gemäß dem Oberbegriff des Anspruchs 9. Ein solches Verfahren und eine solche Vorrichtung sind aus der DE 102 30 241 bekannt.

Jedes Ventil eines Verbrennungsmotors setzt sich aus mehreren Ventiltriebteilen zusammen. Hierbei handelt es sich um das eigentliche Ventil mit einem länglichen Ventilschaft, einem Ventilfederteller, dem eine Ventilfeder zugeordnet ist, und zwei Ventilkeilen. Die Ventilkeile sind gebildet aus einem Rotationskörper mit konischer Außenfläche und einer mittigen Durchgangsbohrung, die auf der Innenseite umlaufende Nuten und dazwischen angeordnete Wülste aufweisen. Durch eine mittige Trennung dieses Rotationskörpers entlang einer durch die Längsmittelachse der Durchgangsbohrung verlaufenden Ebene entstehen die gleich großen Ventilkeile. Der Ventilschaft weist am oberen Ende ebenfalls umlaufende Wülste und Nuten auf, die korrespondierend zu den Wülsten und Nuten an den Ventilkeilen ausgebildet sind, wodurch die von außen an den Ventilschaft angesetzten Ventilkeile eine formschlüssige, axiale Verbindung mit dem Ventilstößel eingehen. Gehalten werden die Ventilkeile am Außenumfang des Ventilstößels in einer eine konische Innenfläche aufweisenden Ausnehmung des Ventilfedertellers, die korrespondierend zur konischen Außenseite der Ventilkeile ausgebildet ist. Die Ventilfeder drückt den Ventilfederteller in Längsrichtung des Ventilschafts gegen die Ventilkeile, wodurch diese infolge der konischen Außenfläche und der konischen Innenfläche des Ventilfedertellers von außen gegen den Ventilschaft gedrückt und dabei an demselben gehalten werden.

Es ist aus der DE 102 30 241 A bekannt, die einzelnen Teile eines Ventils, insbesondere die Ventilkeile, aber auch die Ventilfedern und die Ventilfederteller, maschinell zu montieren. Dazu wird eine Montagevorrichtung verwendet, die vorzugsweise mehrere Montageeinheiten aufweist, wobei jede Montageeinheit dazu dient, mindestens die Ventilkeile jedes Ventils zu montieren. Die Montagevorrichtung weist eine der Anzahl der Ventile eines Verbrennungsmotors entsprechende Zahl von Montageeinheiten auf. Alle Montageeinheiten sind vorzugsweise gleich ausgebildet, weisen nämlich ein Anlagemittel für jeweils einen Ventilteller, einen Anschlagstößel zur Anlage auf dem Ventilschaft und zwei Montagehebel auf.

Problematisch ist die positionsgenaue Montage der Ventilkeile zwischen dem Ventilschaft und dem Ventilfederteller. Die bekannte Montagevorrichtung muss verhältnismäßig aufwendig ausgebildet sein, um eine zuverlässige positionsgerechte Montage der Ventilkeile bei den üblichen hohen Taktzahlen zu gewährleisten.

Der Erfindung liegt nun die Aufgabe zugrunde, ein Verfahren und eine Vorrichtung der eingangs genannten Art zu schaffen, womit Ventilkeile und vorzugsweise auch Ventilfederteller in einfacher Weise zuverlässig und mit hoher Taktzahl montierbar sind.

Ein Verfahren zur Lösung dieser Aufgabe weist die Maßnahmen des Anspruchs 1 auf. Dadurch, dass von der Montageeinheit der Ventilfederteller dem Ventilschaft zugeführt und auf diesen aufgeschoben wird, kann der Ventilfederteller als Anschlag für die Ventilkeile dienen. Demzufolge ist des Weiteren vorgesehen, dass sich die den Montagehebeln zuzuführenden Ventilkeile auf dem Ventilfederteller abstützen, um dann von den Montagehebeln übernommen zu werden. Die Montageeinheit dient somit nicht nur dazu, sowohl den Ventilfederteller als auch die Ventilkeile zu montieren; gleichzeitig wird der Ventilfederteller benutzt, um die Ventilkeile mindestens zur Übergabe an die Montagehebel zu positionieren. Dadurch können separate Positionierungshilfsmittel entfallen. Gleichwohl ist eine zuverlässige Montage der Ventilkeile ohne eine Beeinträchtigung der Taktzahl gewährleistet.

Es ist des Weiteren vorgesehen, vom Ventilfederteller die Ventilkeile in Bezug auf die Längsrichtung des Ventilschafts in eine übernahmegerechte Lage zu den Montagehebeln zu positionieren. Der Ventilfederteller dient somit dazu, die Höhe der Ventilkeile in Bezug auf den Ventilschaft und auch die Montagehebel vorzugeben, damit die Montagehebel die ihnen zugeführten Ventilkeile positionsgerecht übernehmen und exakt an den Ventilschaft ansetzen können.

Eine bevorzugte Weiterbildung des Verfahrens sieht vor, dass die Montageeinheit den Ventilfederteller in einer solchen Relativposition zum oberen freien Ende des Ventilschafts hält, in der von den Montagehebeln die Ventilkeile positionsgerecht übernommen werden. Von der Montageeinheit wird also der Ventilfederteller nicht nur in die richtige Position zum Montieren der Ventilkeile gebracht, vielmehr erhalten die Ventilkeile durch den exakt positionierten Ventilfederteller auch die richtige Position in Längsrichtung des Ventilschafts, die erforderlich ist, damit die Montagehebel die Ventilkeile in der richtigen Position übernehmen können. Vorzugsweise handelt es sich hierbei um eine solche Position, in der die Ventilkeile von den Montagehebeln anschließend an die gegenüberliegenden Außenseiten des oberen Endbereichs des Ventilschafts angesetzt werden. Es ist so die für einen zuverlässigen Montagevorgang der Ventilkeile erforderliche definierte Relativposition zwischen dem Ventilschaft, dem Ventilfederteller und den Montagehebeln mit den zu montierenden Ventilkeilen einfach in Abhängigkeit von der Position der Ventilfederteller herstellbar. Insbesondere können die Ventilkeile im auf dem Ventilfederteller aufliegenden Zustand von den Montagehebeln exakt übernommen und vorzugsweise auch positionsgenau montiert werden.

Gemäß einer bevorzugten Weiterbildung des Verfahrens werden die Ventilkeile in einer solchen Position in Bezug auf die Längserstreckung des Ventilschafts von den Montagehebeln übernommen, in der die Ventilkeile auch anschließend von den Montagehebeln am Ventilschaft montiert, und zwar angesetzt, werden. Die Montageposition wird dabei vom Ventilfederteller, worauf die Ventilkeile zum Übernehmen von den Montagehebeln anliegen, vorgegeben, so dass hierfür keine neue Positionierung der Ventilkeile und insbesondere keine Ausrichtung derselben erforderlich ist. Dabei können die Ventilkeile während des Montagevorgangs auf dem Ventilfederteller geführt werden.

Verfahrensmäßig ist weiterhin vorgesehen, der Montageeinheit jeweils zwei zu montierende Ventilkeile einzeln zuzuführen und dabei in Relativlagen an gegenüberliegenden Seiten des Ventilschafts zu bringen, in denen die auf dem Ventilfederteller aufliegenden Ventilkeile von den Montagehebeln übernommen werden und durch Zusammenbewegen mindestens der die Ventilkeile haltenden unteren Enden der Montagehebel die Ventilkeile am Ventilschaft ansetzbar sind. Durch das einzelne Zuführen der Ventilkeile zur Montageeinheit können schon bei der Zufuhr die Ventilkeile in die richtige Lage auf gegenüberliegenden Seiten des Ventilschafts gebracht werden. Die richtige Position der Ventilkeile in Bezug auf die Längsrichtung des Ventilschafts wird durch den Ventilfederteller vorgegeben, auf dem die Ventilkeile aufliegen, um eine montagegerechte Position einzunehmen und in dieser Position von den Montagehebeln übernommen zu werden. Auf diese Weise ist es möglich, die Ventilkeile einfach und zuverlässig ohne eine Beeinträchtigung der Montageleistung den Montagehebeln zuzuführen, wobei auch die Ventilkeile in der richtigen Position und Relativlage zum Ventilschaft von den Montagehebeln übernehmbar sind, bevor die Montagehebel die Ventilkeile durch Zusammenbewegen mindestens ihrer unteren Enden seitlich an den Ventilschaft ansetzen.

Eine Vorrichtung zur Lösung der eingangs genannten Aufgabe weist die Merkmale des Anspruchs 9 auf. Demnach weist die Montageeinheit Anlagemittel zum Halten des Ventilfedertellers auf, wobei diese Anlagemittel gleichzeitig zum Positionieren des Ventiltellers in einer bestimmten, vorzugsweise montagegerechten, Position ausgebildet sind. Da das Anlagemittel der Montageeinheit jeweils einen Ventilfederteller hält, kann vom Anlagemittel jeweils ein einzelner benötigter Ventilfederteller aus einem Magazin entnommen werden. Der Ventilfederteller ist dann auch von der Montageeinheit zu montieren, nämlich auf den Ventilschaft aufzusetzen bzw. aufzuschieben. Der am Anlagemittel gehaltene Ventilteller dient gleichzeitig dazu, die den Montagehebeln der Montageeinheit zuzuführenden Ventilkeile jedenfalls in Längsrichtung des Ventilschafts zu positionieren, damit die Montagehebel die einzeln zugeführten Ventilkeile lagegerecht übernehmen können. Vorzugsweise bilden die Ventilfederteller Auflagen für die Ventilkeile zum Übernehmen derselben von den Montagehebeln. Es reicht, wenn die Ventilkeile nur zum Übernehmen von den Montagehebeln auf den Ventilfederteller aufliegen. Anschließend, insbesondere zum Ansetzen der Ventilkeile an den Ventilschaft, kann die Anlage der Ventilkeile auf den Ventilfederteller ganz oder teilweise aufgehoben werden, weil dann die Ventilkeile an den Montagehebeln fixiert gehalten sind, vorzugsweise pneumatisch durch zum Beispiel Unterdruck. Die Montagehebel können die sich auf den Ventilfederteller abstützenden Ventilkeile gegebenenfalls schon vor dem Montieren des Ventilfedertellers auf den Ventilschaft übernehmen. Vorzugsweise aber erfolgt erst das Montieren des Ventilfedertellers durch Aufschieben auf den Ventilschaft, so dass danach die Ventilkeile unter Anlage auf dem Ventilfederteller von den Montagehebeln übernommen werden.

Weiterhin sind das Anlagemittel für jeweils einen Ventilfederteller und die Montagehebel zum Ansetzen der Ventilkeile an den Ventilschaft in einer solchen festen Relativposition in Längsrichtung des Ventilschafts zueinander angeordnet, dass die auf den vom Anlagemittel gehaltenen Ventilfederteller aufliegenden Ventilkeile bei der Anlage auf den Ventilfederteller von den Montagehebeln übernehmbar sind. Dabei entspricht die Übernahmeposition der Ventilkeile von den Montagehebeln der Position der Montagehebel, in der sie die Ventilkeile von gegenüberliegenden Seiten an den Ventilschaft ansetzen können. Dann entspricht die Übernahmeposition der Montagehebel einer montagegerechten Position der Montagehebel gegenüber dem Ventilschaft. Auf diese Weise ist in besonders zuverlässiger Weise eine rasche und fehlerfreie Montage der Ventilkeile und auch des Ventilfedertellers gewährleistet.

Des Weiteren ist vorgesehen, dass der Anschlagstößel der Montageeinheit derart vorzugsweise fest zugeordnet ist, dass bei Anlage des Anlagestößels auf der oberen Stirnfläche des Ventilschafts vom Anlagemittel der Ventilfederteller in einer solchen Position zur Längsachse des Ventilschafts gehalten ist, in der die auf den Ventilfederteller aufliegenden Ventilkeile von den Montagehebeln in einer vorzugsweise montagegerechten Position übernehmbar sind. Dadurch ist eine zuverlässige Relativposition zu allen am Montagevorgang beteiligten Ventiltriebteilen, und zwar insbesondere dem Ventilschaft und dem Ventilfederteller einerseits und den Ventilkeilen andererseits, gewährleistet.

Gemäß einer bevorzugten Ausgestaltung der Vorrichtung sind der Montageinheit oder mindestens den Montagehebeln die Ventilkeile einzeln zuführbar. Auf diese Weise braucht sich in der Nähe der Montagehebel kein Vorrat aus einer Vielzahl von Ventilkeilen zu befinden. Es kann zu keinem Stau der Ventilkeile an den Enden der Montagehebel kommen, so dass jeder Montagehebel zuverlässig mit jeweils einem momentan zu montierende Ventilkeil versorgt wird.

Gemäß einer weiteren Ausgestaltung der Vorrichtung ist der Anschlagstößel zurückbewegbar, derart, dass seine Anlage auf dem Ventilschaft aufgehoben wird. Im Übrigen bleibt jedoch insbesondere das Anlagemittel für den Ventilfederteller und auch die Montagehebel in ihrer vorher eingenommenen Position, so dass trotz des Wegtauchens des Anschlagstößels ein positionsgenaues Ansetzen der Ventilkeile an den Ventilschaft, insbesondere in Längsrichtung desselben, gewährleistet ist. Durch das Zurückfahren des Anschlagstößels stört dieser nicht beim Ansetzen der Ventilkeile an den Ventilschaft, wozu mindestens die die Ventilkeile haltenden Enden der Montagehebel ungehindert zusammenfahren können.

Ein bevorzugtes Ausführungsbeispiel des erfindungsgemäßen Verfahrens und der Vorrichtung wird nachfolgend anhand der Zeichnung näher erläutert. In dieser zeigen:
- Fig. 1: eine Seitenansicht einer Montageeinheit der Vorrichtung in einem vertikalen Schnitt,
- Fig. 2: eine Vorderansicht der Montageeinheit in einem vertikalen Schnitt,
- Fig. 3: eine vergrößerte Einzelheit III der Vorrichtung der Fig. 1,
- Fig. 4: eine vergrößerte Einzelheit IV der Vorrichtung der Fig. 2 mit an Montagehebeln positionierten Ventilkeilen,
- Fig. 5: einen Schnitt V-V durch die Montageeinheit gemäß der Fig. 4,
- Fig. 6: einen Schnitt VI-VI durch die Montageeinheit der Fig. 4,
- Fig. 7: die Einzelheit der Fig. 4 bei an einem Ventilschaft angesetzten Ventilkeilen,

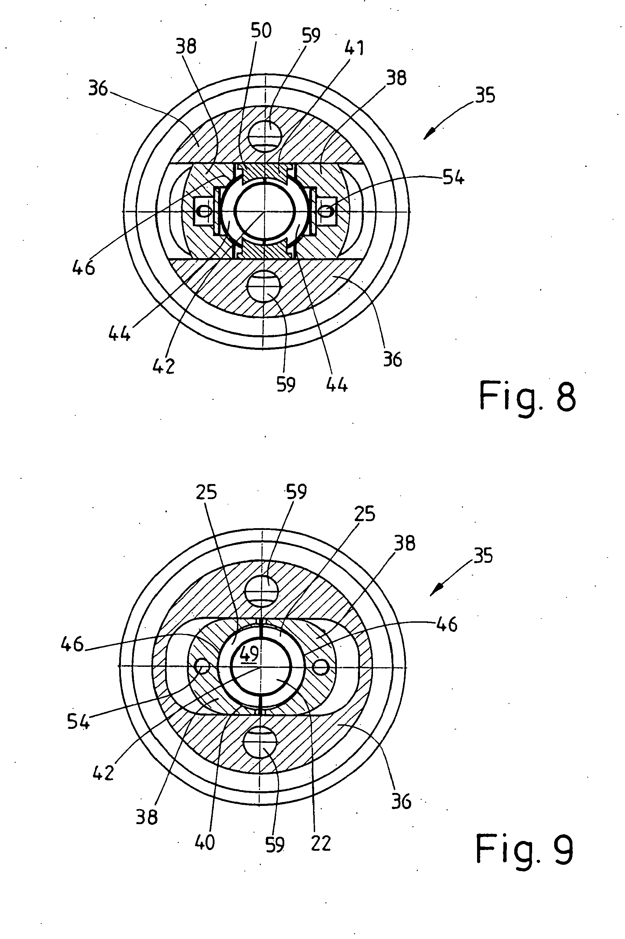

- Fig. 8: einen Schnitt VIII-VIII durch die Montageeinheit der Fig. 7,
- Fig. 9: einen Schnitt IX-IX durch die Montageeinheit der Fig. 7,
- Fig. 10: eine vergrößerte Einzelheit der Montageeinheit analog zu den Fig. 4 und 7 bei fertig montierten Ventilkeilen,

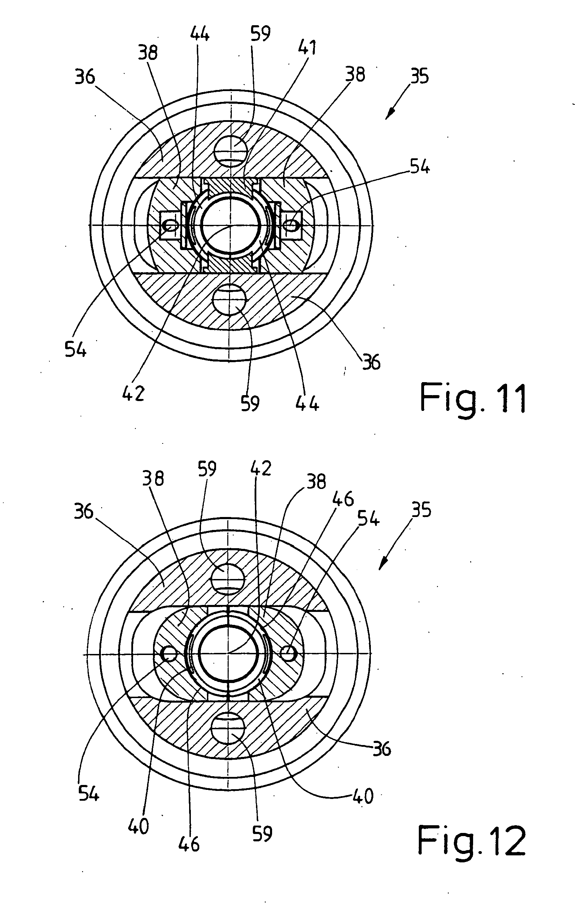

- Fig. 11: einen Schnitt XI-XI durch die Montageeinheit der Fig. 10, und
- Fig. 12: einen Schnitt XII-XII durch die Montageeinheit der Fig. 10.

Die Figuren zeigen eine Montageeinheit 20. Mehrere solcher Montageeinheiten 20 bilden zusammen die erfindungsgemäße Vorrichtung zum automatischen Montieren von Ventilen 21 für Verbrennungsmotoren. Mehrere gleiche Montageeinheiten 20 sind zur Bildung der Vorrichtung in einer oder auch mehreren Reihen nebeneinander bzw. hintereinander angeordnet. Üblicherweise verfügt die Vorrichtung über eine solche Anzahl gleicher Montageeinheiten 20, die der Anzahl der Ventile 21 des Verbrennungsmotors entspricht. Es ist aber auch denkbar, dass die Vorrichtung nur die halbe Anzahl der Montageeinheiten 20 aufweist, so dass zwei vorzugsweise gleiche Vorrichtungen zum Montieren aller Ventile 21 des Verbrennungsmotors vorgesehen sind.

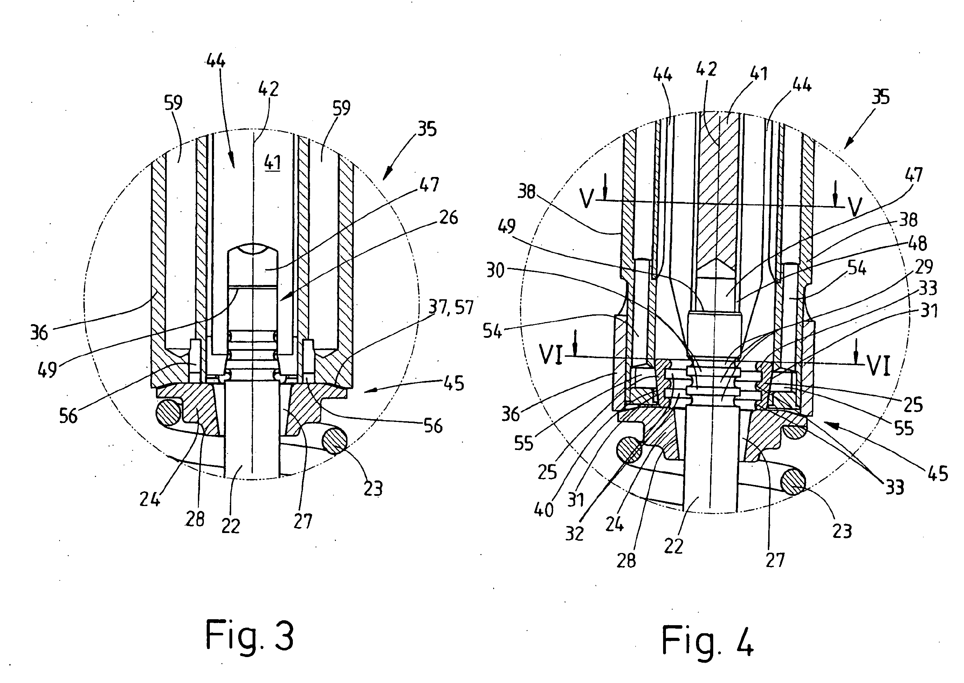

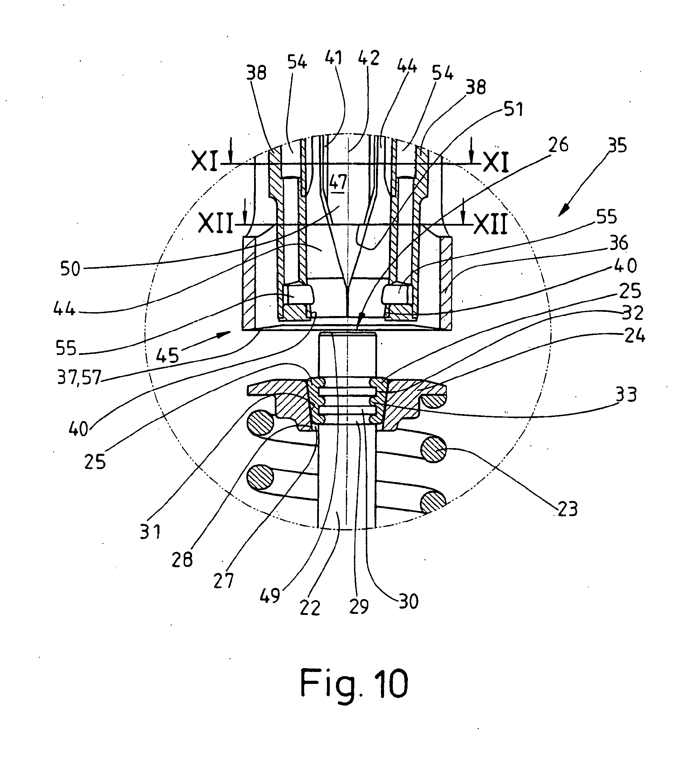

Jede Ventilbaugruppe verfügt über das eigentliche Ventil 21 mit einem länglichen Ventilschaft 22, einer den Ventilschaft 22 konzentrisch umgebenden Ventilfeder 23, einem Ventilfederteller 24 und zwei gleichen Ventilkeilen 25. Die Ventilfeder 23 spannt den Ventilfederteller 24 in Richtung zum freien Ende 26 des Ventilschafts 22 vor. Das heißt, die Ventilfeder 23 drückt den Ventilfederteller 24 zum freien Ende 26 des Ventilschafts 22. Der Ventilfederteller 24 verfügt über eine mittige Durchgangsbohrung 27 mit einer kegelstumpfartigen Innenfläche 28, die sich nach oben zum freien Ende 26 des Ventilschafts 22 erweitert. Die Durchgangsbohrung 27 ist so bemessen, dass sich der Ventilfederteller 24 zwängungsfrei über das obere freie Ende 26 auf den Ventilschaft 22 aufschieben lässt. Der Ventilschaft 22 verfügt mit geringem Abstand von seinem oberen freien Ende 26 über mehrere (im gezeigten Ausführungsbeispiel drei) umlaufende Nuten 29, die voneinander beabstandet sind, so dass zwischen den Nuten 29 im gezeigten Ausführungsbeispiel zwei umlaufende Wülste 30 sich befinden (Fig. 4). Die Ventilkeile 25 sind gebildet aus einem ringförmigen Rotationskörper, der in einer bezogen auf die Figuren vertikalen Längsmittelebene geteilt ist. Die Ventilkeile 25 verfügen über eine konische Außenfläche 31, die bei an den Ventilschaft 22 angesetzten Ventilkeilen 25 korrespondierend zur konischen Innenfläche 28 im Ventilfederteller 24 ausgebildet ist (Fig. 10). Eine innere Durchgangsbohrung zwischen den Ventilkeilen 25 ist mit zwei umlaufenden Nuten 32 versehen, die korrespondierend zu den zwei Wülsten 30 am oberen Ende des Ventilschafts 22 ausgebildet sind und drei voneinander beabstandete Wülste 33, die korrespondierend zu den Nuten 29 des Ventilschafts 22 ausgebildet sind (Fig. 10). Auf diese Weise können die Ventilkeile 25 formschlüssig und axial unverschiebbar an dem Ventilschaft 22 befestigt werden. Zusammengehalten werden dabei die Ventilkeile 25 vom Ventilfederteller 24, in dessen Durchgangsbohrung 27 die Ventilkeile 25 im montierten Zustand eintauchen, so dass die Innenfläche 28 der Durchgangsbohrung 27 des Ventilfedertellers 24 an der konischen Außenfläche 31 der Ventilkeile 25 anliegt und dadurch der von der Ventilfeder 23 hochgedrückte Ventilfederteller 24 die beiden getrennten Ventilkeile 25 im außen an den Ventilschaft 22 angesetzten Zustand zusammenhält (Fig. 10).

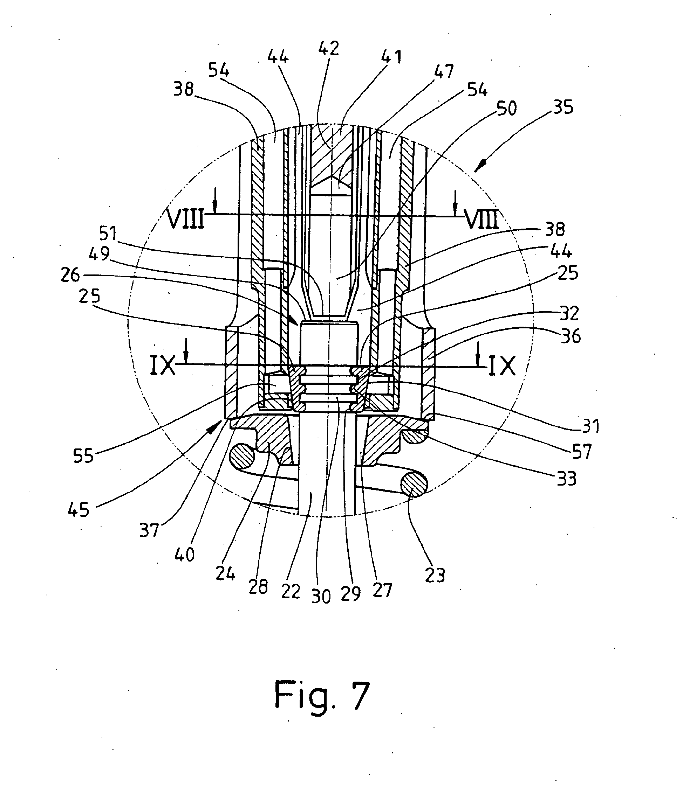

In den Figuren ist nur eine der gleichen Montageeinheiten 20 der erfindungsgemäßen Vorrichtung gezeigt. Die Montageeinheit 20 weist einen Träger 34 auf, der am Arm eines nicht gezeigten Roboters oder einer sonstigen Bewegungseinrichtung angeordnet ist. Am Träger 34 ist ein länglicher, zylindrischer Montagekopf 35 fest angeordnet. Der Montagekopf 35 verfügt über ein Außenrohr 36, dessen unteres Ende ein Anlagemittel 37 für den Ventilfederteller 24 aufweist. Im Inneren des Anlagemittels 37 sind zwei längliche Montagehebel 38 angeordnet. Die gleichen Montagehebel 38 liegen spiegelbildlich zueinander dem Ventilschaft 22 diametral gegenüber. Jeder Montagehebel 38 ist im oberen Endbereich um einen im Träger 34 fest angeordneten, horizontalen Bolzen 39 verschwenkbar in einer vertikalen Mittelebene durch den Montagekopf 35. Dadurch sind untere Enden der Montagehebel 38 mit jeweils einer Ventilkeilaufnahme 40 gegensinnig zusammenbewegbar (Fig. 7) und auseinanderbewegbar (Fig. 4). Im Inneren des Außenrohrs 36 ist zwischen den Montagehebeln 38 ein Anschlagstößel 41 angeordnet. Eine in Längsrichtung des länglichen Anschlagstößels 41 verlaufende Längsmittelachse desselben liegt auf einer Längsmittelachse 42 des Außenrohrs 36 des Montagekopfes 35. Der Anschlagstößel 41 ist mit einem Linearantrieb 43, bei dem es sich beispielsweise um einen Pneumatikzylinder handeln kann, auf der Längsmittelachse 42 des Montagekopfs 35 auf- und abbewegbar.

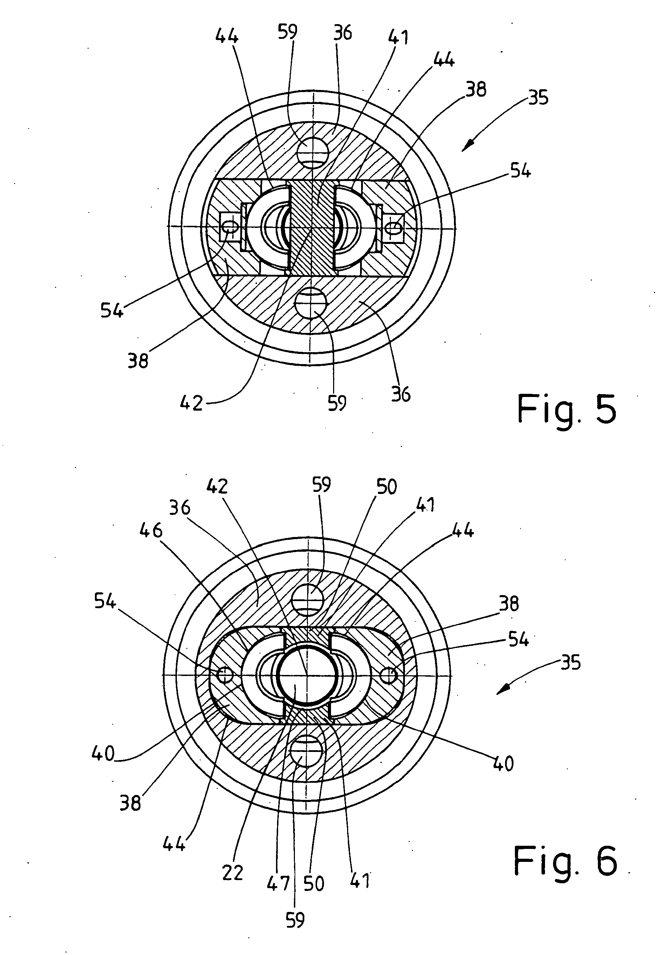

Der Anschlagstößel 41 und die zu denselben gerichteten Seiten der Montagehebel 38 sind so profiliert, dass auf jeder Seite des Anschlagstößels 41 zwischen demselben und der dieser zugerichteten Wandung des jeweiligen Montagehebels 38 je ein sich längs durch den Montagekopf 35 erstreckender Zuführkanal 44 für jeweils einen vereinzelten Ventilkeil 25 entsteht. Da auf beiden Seiten des Anschlagstößels 41 ein im Querschnitt gleicher, jedoch spiegelverkehrt orientierter Zuführkanal 44 gebildet ist, sind die zwei für jeden Montagevorgang benötigten Ventilkeile 25, also jeweils ein Ventilkeilpaar, gleichzeitig den Ventilkeilaufnahmen 40 am unteren Ende des jeweiligen Montagehebels 38 zuführbar. Der Anschlagstößel 41 weist mit Abstand über dem unteren Ende 45 des Montagekopfes 35 einen etwa rechteckförmigen Querschnitt auf. Dieser Querschnitt des Anschlagstößels 41 ist bis zum oberen Ende, das zum Linearantrieb 43 weist, etwa gleich. Demgegenüber weisen die dem Anschlagstößel 41 zugerichteten Seiten der Montagehebel 38 kreisbogenförmige Ausnehmungen 46 auf, so dass der Zuführkanal 44 einen etwa halbkreisförmigen Querschnitt aufweist, der der größten halbkreisförmigen Grundfläche des jeweiligen Ventilkeils 25 entspricht (Fig. 5 und 6). Dadurch können die Ventilkeile 25 geführt durch den Montagekopf 35 rutschen, wobei die Ventilkeile 25 von oben auf den Ventilschaft 22 gesehen so ausgerichtet sind, wie sie später seitlich an den Ventilschaft 22 angesetzt werden. An der Unterseite weist der Anschlagstößel 41 eine Sackbohrung 47 auf, die so bemessen ist, dass in diese ein oberer Kopfteil des Ventilschafts 22 eintreten kann. Die Sackbohrung 47 weist eine Anlagefläche 48 auf, woran eine Stirnfläche 49 des Ventilschafts 22 anliegt, wenn sich der Anschlagstößel 41 in der maximal heruntergefahrenen Position befindet (Fig. 4). Die Sackbohrung 47 ist in demjenigen Bereich, in den ein oberer Endbereich des Ventilschafts 22 eintritt, größer bemessen als die Breite des im Querschnitt rechteckförmigen Anschlagstößels 41. Dadurch verfügt der Anschlagstößel 41 im unteren Endbereich lediglich noch über zwei parallele Zungen 50, die sich auf gegenüberliegenden Seiten des in die Sackbohrung 47 eintretenden Ventilschafts 22 befinden (Fig. 6). Diese Zungen 50 verjüngen sich in ihrem unteren Endbereich 51 V-förmig (Fig. 10). Die Zungen 50 sind so ausgebildet, dass sie bei auseinanderbewegten Ventilkeilaufnahmen 40 der Montagehebel 38, wenn der Anschlagstößel 41 heruntergefahren ist zur Bildung eines Anschlags für eine obere Stirnfläche 49 des Ventilschafts 22, untere Abschnitte der Zungen 50 bis etwa auf den Ventilfederteller 24 heruntergefahren sind und sich so zwischen den Ventilkeilaufnahmen 40 befinden. Vor dem Zusammenfahren der Ventilkeilaufnahmen 40 der Montagehebel 38, also zum Ansetzen der Ventilkeile 25 an den Ventilschaft 22, werden durch das Hochfahren des Anschlagstößels 41 die Zungen 50 vom Ventilfederteller 24 beabstandet und dadurch aus dem Bereich der zusammenzufahrenden Ventilkeilaufnahmen 40 herausbewegt.

In der Montageeinheit 20 sind oberhalb der Zuführkanäle 44 Transportkanäle 52 zur Zufuhr einzelner Ventilkeile 25 zum Montagekopf 35 vorgesehen. Jedem Zuführkanal 44 am Montagekopf 35 ist ein eigener Transportkanal 52 zugeordnet. Die Transportkanäle 52 sind außerhalb der Montageeinheit 20 fortgeführt durch nicht gezeigte Rohre oder Schläuche, worüber von einem nicht gezeigten Magazin die einzelnen Ventilkeile 25 der Montageeinheit 20 zuführbar sind, was gegebenenfalls beim Verfahren oder während des Verfahrens des Montagekopfes 35 erfolgen kann. Der Montagekopf 35 weist unterhalb der Bolzen 39 zur Lagerung der Montagehebel 38 mindestens ein Verschlussmittel für die oberen Enden der Zuführkanäle 44 auf. Im gezeigten Ausführungsbeispiel ist das Verschlussmittel als ein Schieber 53 ausgebildet. Der Schieber 53 hält über die Transportkanäle 52 zugeführte Ventilkeile 25 so lange fest, bis ein Paar zweier Ventilkeile 25 über jeden Zuführkanal 44 den Ventilkeilaufnahmen 40 an den unteren Enden der Montagehebel 38 zugeführt werden kann. Dadurch dient der Schieber 53 als Vereinzelungs- und Steuerorgan für die Zufuhr der Ventilkeile 25. Über dem Schieber 53 kann sich dadurch in den Transportkanälen 52 gegebenenfalls ein Vorrat mehrerer übereinander liegender Ventilkeile 25 bilden.

Die Montagehebel 38 weisen jeweils eine sich längs durch dieselben erstreckende dünne Saugluftbohrungen 54 auf (Fig. 4 bis 6). An den unteren Enden der Montagehebel 38 zweigt von jeder Saugluftbohrung 54 jeweils eine etwa horizontale Ansaugbohrung 55 für die Ventilkeile 25, die in der Ventilkeilaufnahme 40 jedes Montagehebels 38 mündet (Fig. 4) ab. An den oberen Enden der Montagehebel 38 sind die Saugluftbohrungen 54 über Anschlüsse 58, die auch als Ventile ausgebildet sein können, an eine in den Figuren nicht gezeigte Unterdruckquelle angeschlossen.

Im Außenrohr 36 befindet sich ebenfalls mindestens eine Saugluftbohrung 59, und zwar im gezeigten Ausführungsbeispiel zwei parallele Saugluftbohrungen 59 (Fig. 3, 4 und 6). Die Enden der Saugluftbohrungen 59 münden über Ausgangsbohrungen 56 in der Anlagefläche 57 für den Ventilfederteller 24 unter dem Außenrohr 36 (Fig. 3).

Dadurch, dass die Montagehebel 38 um die Bolzen 39 schwenkbar am Montagekopf 35 gelagert sind, verfügen die Montagehebel 38 des Montagekopfes 35 über eine in Längsrichtung des Montagekopfs 35 festgelegte Relativposition zum Außenrohr 36 und insbesondere der Anlagefläche 57 für einen Ventilfederteller 24 unter insbesondere dem Außenrohr 36 des Montagekopfes 35. Auch der Anschlagstößel 41 nimmt in seiner heruntergefahrenen Stellung (Fig. 3 und 4) eine definierte und vorgegebene Relativposition zu den Ventilkeilaufnahmen 40 an den unteren Enden der Montagehebel 38 und die Anlagefläche 57 des Montagekopfs 35 ein. Diese definierte Stellung des Anschlagstößels 41 ist vorgegeben durch nicht gezeigte Anschläge der Montageeinheit 20. Nur zum Ansetzen der Ventilkeile 25 an den Ventilschaft 22 wird der Anschlagstößel 41 hochgefahren. Dabei bleibt die Relativposition zwischen dem Ventilschaft 22 und dem Ventilfederteller 24 sowie die an den Ventilkeilaufnahmen 40 der Montagehebel 38 gehaltenen Ventilkeile 25 unverändert, indem abgesehen vom Hochfahren des Anschlagstößel 41 der Montagekopf 35 und auch die Montageeinheit 20 im Übrigen ihre Position nicht verändern, insbesondere die am Montagekopf 35 durch die Bolzen 39 gelagerten Montagehebel 38 ihre Position zum Außenrohr 36 des Montagekopfs 35 beibehalten. Dabei bleibt vor allem die Relativposition zwischen den Ventilkeilaufnahmen 40 der Montagehebel 38 und der Anlagefläche 57 für den Ventilfederteller 24 unter dem Montagekopf 35 unverändert.

Die Funktionsweise der Vorrichtung, insbesondere jeder Montageeinheit 20, und das erfindungsgemäße Verfahren werden nachfolgend erläutert:

Das erfindungsgemäße Verfahren läuft für alle Montageeinheiten 20 der Vorrichtung in der gleichen Weise ab. Alle Montageeinheiten 20 der Vorrichtung montieren gleichzeitig, also zusammen jeweils an jedem Ventil 21 einen Ventilfederteller 24 und zwei Ventilkeile 25. Im Folgenden wird nur der Montagevorgang für ein Ventil 21 mit einer der Montageeinheiten 20 der Vorrichtung beschrieben.

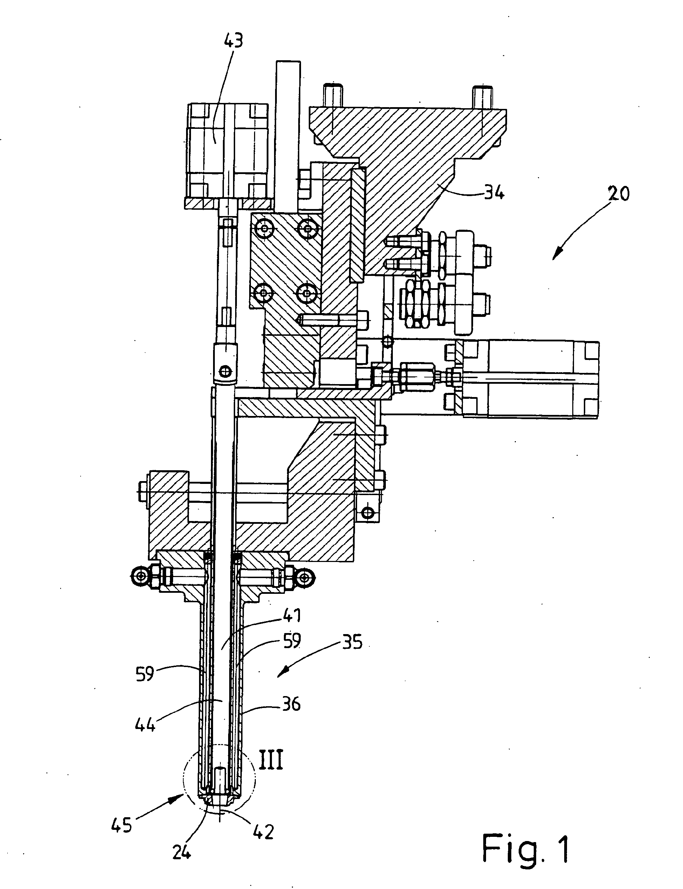

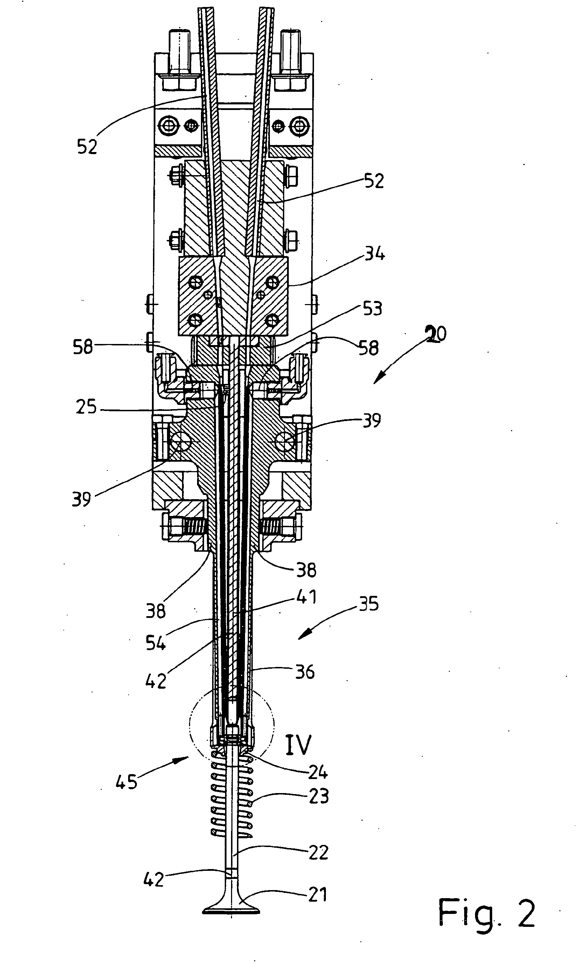

Durch Verfahren des die Vorrichtung mit den dieser zugeordneten Montageeinheiten 20 tragenden Roboterarms oder dergleichen zu einem in der Figur nicht dargestellten Magazin wird von jeder Montageeinheit 20 jeweils ein einzelner Ventilfederteller 24 übernommen. Der Ventilfederteller 24 wird unter der das Anlagemittel 37 bildenden Anlagefläche 57 des Montagekopfs 35 durch Unterdruck angesaugt und dabei unter der als Anlagemittel 37 für den Ventilfederteller 24 dienenden Anlagefläche 57 des Außenrohrs 36 des Montagekopfs 35 gehalten (Fig. 1). Nunmehr wird die Vorrichtung mit einem Roboterarm so verfahren, dass die Längsmittelachse 42 des Montagekopfs 35 der Montageeinheit 20 in eine Position über dem Ventilschaft 22 des Ventils 21 gebracht wird, das von der Montageeinheit 20 mit dem Ventilfederteller 24 und den Ventilkeilen 25 zu versehen ist. Dabei wird die Längsmittelachse 42 des Montagekopfs 35 über der Längsmittelachse des Ventilschafts 22 positioniert, so dass die Längsmittelachse des Ventilschafts 22 die Längsmittelachse 42 des Montagekopfs 35 zu seinem unteren Ende 45 hin verlängert (Fig. 2).

Durch Absenken der Montageeinheit 20 wird der Ventilfederteller 24 mit seiner Durchgangsbohrung 27 von oben über den Ventilschaft 22 geschoben. Die Montageeinheit 20 bzw. nur der Montagekopf 35 werden soweit abgesenkt, dass die obere Stirnfläche 49 des Ventilschafts 22 an der Anlagefläche 48 des Anschlagstößels 41 anstößt. Alternativ oder zusätzlich können auch die unteren Flächen der Zungen 50 des Anschlagstößels 41 sich auf dem Ventilfederteller 24 abstützen. Durch den Anschlagstößel 41 oder alternativ bzw. auch zusätzlich die Anlagefläche 57 des Montagekopfs 35, insbesondere das Außenrohr 36, wird die Relativposition des Ventilfedertellers 24 zum Ventilschaft 22 mit den maßlichen Vorgaben des Ventils 21 entsprechend festgelegt, also der Ventilfederteller 24 in eine Position zum Ventilschaft 22 gebracht, in der die Ventilkeile 25 von außen an den Ventilschaft 22, und zwar die Nuten 29 und die Wülste 30, ansetzbar sind (Fig. 3).

Im Folgenden werden bei der sich noch in der Ausgangsstellung befindlichen Montagehebeln 38, in der die unteren Enden der Montagehebel 38 mit den Ventilkeilaufnahmen 40 weitest möglich von dem Ventilschaft 22 entfernt sind, zwei einzelne Ventilkeile 25 dem Montagekopf 35 zugeführt. Dabei rutscht jeweils ein Ventilkeil 25 schwerkraftbedingt und/oder pneumatisch, beispielsweise luftunterstützt, durch jeden der beiden auf gegenüberliegenden Seiten des Anschlagstößel 41 gebildeten Zuführkanälen 44 im Montagekopf 35 nach unten. Die Ventilkeile 25 fallen dabei auf den unter der Anlagefläche 57 des Montagekopfs 35 gehaltenen Ventilfederteller 24. Dabei legt der Ventilfederteller 24 die Position der Ventilkeile 25 in Längsrichtung des Ventilschafts 22 und auch die Relativposition der Ventilkeile 25 zu den Ventilkeilaufnahmen 40 an den unteren Enden der Montagehebel 38 fest (Fig. 4). Beim Herunterfallen in den Zuführkanälen 44 werden die Ventilkeile 25 in ihrer Lage (in Draufsicht auf die Ventilkeile 22) im jeweiligen Zuführkanal 44 geführt, in dem jeder Zuführkanal 44 an die Außenkontur des jeweiligen Ventilkeils 25 angepasst ist (Fig. 5 und 6). Jeder Ventilkeil 25 rutscht also im Zuführkanal 44 zwischen dem Anschlagstößel 41 und dem Montagehebel 38, der der jeweiligen Seite des Anschlagstößel 41 zugeordnet ist, derart geführt nach unten, dass die Ventilkeile 25 nahezu ihre Position zum Ansetzen an den Ventilschaft 22 einnehmen. Diese Position wird vor allem unter Einbeziehung des Ventilfedertellers 24 festgelegt durch Auflage der Ventilkeile 25 auf demselben.

Die beiden durch die Zuführkanäle 44 zugeführten Ventilkeile 25 liegen so auf dem Ventilfederteller 24 auf, dass sie auch aufgrund der Führung der Ventilkeile 25 in den Zuführkanälen 44 sich in einer Position befinden, in der sie von den Montagehebeln 38 übernehmbar sind (Fig. 4). In dieser Position liegen die Ventilkeile 25 mit ihren konischen Außenflächen 31 bereits an den korrespondierend ausgebildeten Ventilkeilaufnahmen 40 der Montagehebel 38 an. Der Übernahmevorgang der Ventilkeile 25 durch die Montagehebel 38 beschränkt sich erfindungsgemäß deshalb nur noch darauf, dass die Ventilkeile 25 durch die Erzeugung von Unterdruck in den in den Ventilkeilaufnahmen 40 mündenden Ansaugbohrungen 55 pneumatisch an den Ventilkeilaufnahmen 40 fixiert werden (Fig. 4).

Nachdem die Montagehebel 38 die an den Ventilschaft 22 anzusetzenden Ventilkeile 25 übernommen haben, das heißt, die Ventilkeile 25 durch Unterdruck an den Ventilkeilaufnahmen 40 an den unteren Enden der Montagehebeln 38 fixiert sind, wird der Anschlagstößel 41 hochgefahren, so dass die Zungen 50 denjenigen Bereich des Ventilschafts 22, an den die Ventilkeile 25 angesetzt werden sollen, freigeben (Fig. 7). Nun werden durch gegensinniges Verschwenken der Montagehebel 38 um die Bolzen 39 die unteren Enden der Montagehebel 38 mit den an den Ventilkeilaufnahmen 40 pneumatisch gehaltenen Ventilkeilen 25 zusammengefahren, und zwar so weit, bis die Ventilkeile 25 von entgegengesetzten Seiten an den Ventilschaft 25 angesetzt sind, wobei in den Nuten 29 des Ventilschafts 22 die Wülste 33 der Ventilkeile 25 und in die Wülste 30 des Ventilschafts 22 die Nuten 32 der Ventilkeile 25 eingreifen (Fig. 7).

Nach dem Ansetzen der Ventilkeile 25 an den Ventilschaft 22 wird der gesamte Montagekopf 35 hochgefahren, wobei die Ventilkeilaufnahmen 40 an den unteren Enden der Montagehebel 38 an der Außenfläche 31 der Ventilkeile 25 nach oben abgleiten. Durch das Hochfahren des Montagekopfs 35 fährt auch das Außenrohr 36 mit dem Anlagemittel 37 bzw. die Anlagenfläche 57 des Ventilfedertellers 24 nach oben, wodurch die Ventilfeder 23 den Ventilfederteller 24 hochdrückt. Solange der Ventilfederteller 24 von der Ventilfeder 23 hochbewegt wird, fährt der Ventilfederteller 24 noch unter Anlage an der Anlagefläche 57 des Außenrohrs 36 mit dem Montagekopf 35 hoch. Dabei gelangen die Ventilkeile 25 in die konische Durchgangsbohrung 27 des Ventilfedertellers 24. Nach dem Hochfahren des Montagekopfs 35 bzw. der Montageeinheit 20 sind die Ventilkeile 25 zwischen dem Ventilfederteller 24 und dem Ventilschaft 22 formschlüssig gesichert (Fig. 10). Anschließend schwenken die Montagehebel 38 wieder gegensinnig in ihre Ausgangsstellung, so dass die unteren Enden der Montagehebel 38 wieder auseinandergefahren sind (Fig. 4). Vorzugsweise werden die Montagehebel 38 durch ein Absenken des Anschlagstößels 41 in ihre Ausgangsstellung mit auseinandergefahrenen Ventilkeilaufnahmen 40 gebracht. Es kann dann ein neuer Montagevorgang beginnen, durch Abholen eines neuen Ventilfedertellers 24 vom Magazin, Montage des Ventilfederteller 24 auf dem Ventilschaft 22 und Zuführen neuer Ventilkeile 25 zu den Montagehebeln 38, die die Ventilkeile 25 schließlich von außen an den Ventilschaft 22 ansetzen.

Die Ventilkeile 25 stützen sich erfindungsgemäß auf dem Ventilfederteller 24 ab, um ihre vorgegebene Position in Längsrichtung des Ventilschafts 22 zu erhalten. Diese Position ist so gewählt, dass die sich auf der Oberseite des Ventilfedertellers 24 abstützenden Ventilkeile 25 von den Montagehebeln 38 einfach dadurch übernommen werden können, dass sie quasi schon an den Ventilkeilaufnahmen 40 an den unteren Enden der Montagehebel 38 anliegen und nur noch durch Saugluft aus den Ansaugbohrungen 55 angesaugt werden müssen. Während des nachfolgenden Ansetzens der an den Ventilkeilaufnahmen 40 der Montagehebel 38 gehaltenen Ventilkeile 25 an den Ventilschaft 22 brauchen sich die Ventilkeile 25 nicht mehr auf den Ventilfedertellern 24 abzustützen. Es ist jedoch denkbar, dass sich die Ventilkeile 25, solange sie sich noch nicht über der Durchgangsbohrung 27 im Ventilfederteller 24 befinden, noch auf der Oberseite der Ventilfederteller 24 abstützen, wodurch die richtige Position der Ventilkeile 25 an den Ventilkeilaufnahmen 40 der Montagehebel 38 während des Ansetzvorgangs der Ventilkeile 25 an den Ventilschaft 22 zuverlässig bestehen bleibt.

### Bezugszeichenliste:

- 20: Montageeinheit
- 21: Ventil
- 22: Ventilschaft
- 23: Ventilfeder
- 24: Ventilfederteller
- 25: Ventilkeil
- 26: freies Ende
- 27: Durchgangsbohrung
- 28: Innenfläche
- 29: Nut
- 30: Wulst
- 31: Außenfläche
- 32: Nut
- 33: Wulst
- 34: Träger
- 35: Montagekopf
- 36: Außenrohr
- 37: Anlagemittel
- 38: Montagehebel
- 39: Bolzen
- 40: Ventilkeilaufnahme
- 41: Anschlagstößel
- 42: Längsmittelachse
- 43: Linearantrieb
- 44: Zuführkanal
- 45: unteres Ende
- 46: Ausnehmung
- 47: Sackbohrung
- 48: Anlagefläche
- 49: Stirnfläche
- 50: Zunge
- 51: unterer Endbereich
- 52: Transportkanal
- 53: Schieber
- 54: Saugluftbohrung
- 55: Ansaugbohrung
- 56: Ansaugbohrung
- 57: Anlagefläche
- 58: Anschluss
- 59: Saugluftbohrung

## Patentansprüche

1. Verfahren zum maschinellen Montieren von Ventilkeilen (25) zwischen einem Ventilfederteller (24) und einem Ventilschaft (22) eines Ventils (21) eines Verbrennungsmotors, wobei einer Montageeinheit (20) die Ventilkeile (25) zugeführt werden und von der Montageeinheit (20) zugeordneten Montagehebeln (38) die Ventilkeile (25) in der vorgesehenen Position an den Ventilschaft (22) angesetzt werden, **dadurch gekennzeichnet, dass** von der Montageeinheit (20) der Ventilfederteller (24) zugeführt sowie auf den Ventilschaft (22) montiert wird, und dass beim Zuführen der Ventilkeile (25) sich diese zur Positionierung mindestens zur Übernahme von den Montagehebeln (38) auf dem Ventilfederteller (24) abstützen.

2. Verfahren nach Anspruch 1, **dadurch gekennzeichnet, dass** vom Ventilfederteller (24) die Ventilkeile (25) in Bezug auf die Längsachse des Ventilschafts (22) in einer übernahmegerechten Lage zu den Montagehebeln (38) positioniert werden.

3. Verfahren nach Anspruch 1 oder 2, **dadurch gekennzeichnet, dass** der Ventilfederteller (24) von der Montageeinheit (20) in einer solchen Relativposition zu einem oberen freien Ende (26) des Ventilschafts (22) gehalten wird, in der von den Montagehebeln (38) die Ventilkeile (25) positionsgerecht mindestens übernommen werden können, insbesondere die Ventilkeile (25) bei Auflage auf den Ventilfederteller (24) von den Montagehebeln (38) übernommen werden.

4. Verfahren nach einem der vorhergehenden Ansprüche, **dadurch gekennzeichnet, dass** die Ventilkeile (25) in einer solchen Position in Bezug auf die Längsachse des Ventilschafts (22) von den Montagehebeln (38) übernommen werden, in der die Ventilkeile (25) von den Montagehebeln (38) am Ventilschaft (22) montiert werden.

5. Verfahren nach einem der vorhergehenden Ansprüche, **dadurch gekennzeichnet, dass** die Montageeinheit (20) den Ventilfederteller (24) in eine solche Position längs zum Ventilschaft (22) bringt und bis zur erfolgten Montage der Ventilkeile (25) hält, in der die Ventilkeile (25) unter Anlage auf den Ventilfederteller (24) von den Montagehebeln (38) übernommen und positionsgerecht am Ventilschaft (22) angesetzt werden.

6. Verfahren nach einem der vorhergehenden Ansprüche, **dadurch gekennzeichnet, dass** von der Montageeinheit (20) unter Abstützung auf dem Ventilschaft (22) der Ventilfederteller (24) in die zur Übernahme der auf dem Ventilfederteller (24) aufliegenden Ventilkeile (25) durch die Montagehebel (38) und das Ansetzen der Ventilkeile (25) von den Montagehebeln (38) an den Ventilschaft (22) gerechte Position zur Längsachse des Ventilschafts (22) gebracht werden.

7. Verfahren nach einem der vorhergehenden Ansprüche, **dadurch gekennzeichnet, dass** von der Montageeinheit (20) jeweils ein Ventilfederfeller (24) aus einem Magazin übernommen und vorzugsweise durch Unterdruck an einem Anlagemittel (37), insbesondere einer Anlagefläche (57) der Montageeinheit (20), gehalten wird.

8. Verfahren nach einem der vorhergehenden Ansprüche, **dadurch gekennzeichnet, dass** der Montageeinheit (20) jeweils zwei zu montierende Ventilkeile (25) einzeln zugeführt und dabei in Relativlage zum Ventilschaft (22) gebracht werden, in denen die auf den Ventilfederteller (24) aufliegenden Ventilkeile (25) von den Montagehebeln (38) übernommen und durch Zusammenbewegen mindestens der die Ventilkeile (25) haltenden unteren Enden der Montagehebel (38) die Ventilkeile (25) an den Ventilschaft (22) ansetzbar sind.

9. Vorrichtung zum maschinellen Montieren von Ventilkeilen (25), zwischen Ventilfedertellern (24) und Ventilschäften (22) von Ventilen (21) für Verbrennungsmotoren, mit einer jeweils einem Ventil (21) zugeordneten Montageeinheit (20), die ein Anlagemittel (37) für jeweils einen Ventilfederteller (24), vorzugsweise einen mittigen Anschlagstößel (41) zur Anlage auf dem Ventilschaft (22) und zwei Montagehebel (38) aufweist, wobei das Anlagemittel (37) zum Halten des Ventilfedertellers (24) in einer bestimmten Position zu den Montagehebeln (38) ausgebildet ist, **dadurch gekennzeichnet, dass** das Anlagemittel (37) und die Montagehebel (38) in einer solchen festen Relativposition in Längsrichtung des Ventilschafts (22) zueinander angeordnet sind, dass die auf den vom Anlagemittel (37) gehaltenen Ventilfederteller (24) aufliegenden Ventilkeile (25) von den Montagehebeln (38) übernehmbar und positionsgerecht am Ventilschaft (22) ansetzbar sind.

10. Vorrichtung nach Anspruch 9, **dadurch gekennzeichnet, dass** der Anschlagstößel (41) der Montageeinheit (20) derart zugeordnet ist, dass bei Anlage des Anschlagstößels (41) auf den Ventilschaft (22) vom Anlagemittel (37) zum Halten des Ventilfedertellers (24) der Ventilfederteller (24) in einer solchen Position zur Längsachse des Ventilschafts (22) gehalten ist, in der die auf dem Ventilfederteller (24) aufliegenden Ventilkeile (25) von den Montagehebeln (38) in eine montagegerechte Position übernehmbar sind.

11. Vorrichtung nach einem der Ansprüche 9 oder 10, **dadurch gekennzeichnet, dass** die Montageeinheit (20) Mittel zum vorzugsweise pneumatischen Halten des Ventilfedertellers (24) unter dem Anlagemittel (37) und/oder Mittel zum vorzugsweise pneumatischen Halten der Ventilkeile (25) in montagegerechter Position an den Montagehebeln (38), insbesondere Ventilkeilaufnahmen (40) desselben, aufweist.

12. Vorrichtung nach einem der Ansprüche 9 bis 11, **dadurch gekennzeichnet, dass** den Montagehebeln (38) und/oder der Montageeinheit (20), die Ventilkeile (25) einzeln zuführbar sind, vorzugsweise pneumatisch und/oder schwerkraftbedingt.

13. Vorrichtung nach einem der Ansprüche 9 bis 12, **dadurch gekennzeichnet, dass** der Anschlagstößel (41) der Montageeinheit (20) zum Ansetzen der Ventilkeile (25) an den Ventilschaft (22) zurückfahrbar ist, während die Montageeinheit (20) im Übrigen ihre Relativposition zum Ventilschaft (22), insbesondere in Längsrichtung desselben, beibehält.

## Claims

1. Method for the machine-based assembly of valve keys (25) between a valve spring plate (24) and a valve shank (22) of a valve (21) of an internal combustion engine, with the valve keys (25) being supplied to an assembly unit (20), and with the valve keys (25) being placed in the intended position on the valve shank (22) by assembly levers (38) which are assigned to the assembly unit (20), **characterized in that** the valve spring plate (24) is supplied and is assembled on the valve shank (22) by the assembly unit (20), and **in that** during the supply of the valve keys (25), the latter are supported on the valve spring plate (24) for positioning at least for the takeover by the assembly levers (38).

2. Method according to Claim 1, **characterized in that** the valve spring plate (24) positions the valve keys (25) with respect to the longitudinal axis of the valve shank (22) in a position relative to the assembly levers (38) which is suitable for takeover.

3. Method according to Claim 1 or 2, **characterized in that** the valve spring plate (24) is held by the assembly unit (20) in a relative position with respect to an upper free end (26) of the valve shank (22) in which the assembly levers (38) can at least take over the valve keys (25) in the correct position, in particular, the valve keys (25) are taken over by the assembly levers (38) when said valve keys (25) are resting on the valve spring plate (24).

4. Method according to one of the preceding claims, **characterized in that** the assembly levers (38) take over the valve keys (25) in a position with respect to the longitudinal axis of the valve shank (22) in which the valve keys (25) are assembled by the assembly levers (38) on the valve shank (22).

5. Method according to one of the preceding claims, **characterized in that** the assembly unit (20) places the valve spring plate (24) into a position longitudinally with respect to the valve shank (22), and holds said valve spring plate (24) in said position until the assembly of the valve keys (25) has taken place, in which the valve keys (25) are, while abutting against the valve spring plate (24), taken over and placed in the correct position on the valve shank (22) by the assembly levers (38).

6. Method according to one of the preceding claims, **characterized in that** the assembly unit (20), while supported on the valve shank (22), places the valve spring plate (24) into that position with respect to the longitudinal axis of the valve shank (22) which is suitable for the takeover of the valve keys (25), which are resting on the valve spring plate (24), by the assembly levers (38) and for the placement of the valve keys (25) on the valve shank (22) by the assembly levers (38).

7. Method according to one of the preceding claims, **characterized in that** the assembly unit (20) takes over in each case one valve spring plate (24) from a magazine and preferably holds said valve spring plate (24) by means of a vacuum against an abutment means (37), in particular an abutment face (57) of the assembly unit (20).

8. Method according to one of the preceding claims, **characterized in that** in each case two valve keys (25) which are to be assembled are supplied separately to the assembly unit (20) and, here, are placed into a relative position with respect to the valve shank (22) in which the valve keys (25) which are resting on the valve spring plate (24) are taken over by the assembly levers (38) and the valve keys (25) can be placed on the valve shank (22) by moving at least the lower ends, which hold the valve keys (25), of the assembly levers (38) together.

9. Device for the machine-based assembly of valve keys (25) between valve spring plates (24) and valve shanks (22) of valves (21) for internal combustion engines, having an assembly unit (20) which is assigned to in each case one valve (21) and which has an abutment means (37) for in each case one valve spring plate (24), preferably a central stop plunger (41) for abutment against the valve shank (22), and two assembly levers (38), with the abutment means (37) being designed for holding the valve spring plate (24) in a certain position with respect to the assembly levers (38), **characterized in that** the abutment means (37) and the assembly levers (38) are arranged in a fixed relative position with respect to one another in the longitudinal direction of the valve shank (22) in such a way that the valve keys (25) which are resting on the valve spring plate (24) which is held by the abutment means (37) can be taken over by the assembly levers (38) and placed in the correct position on the valve shank (22).

10. Device according to Claim 9, **characterized in that** the stop plunger (41) is assigned to the assembly unit (20) in such a way that, when the stop plunger (41) abuts against the valve shank (22), the abutment means (37) for holding the valve spring plate (24) hold the valve spring plate (24) in a position with respect to the longitudinal axis of the valve shank (22) in which the valve keys (25) which are resting on the valve spring plate (24) can be taken over by the assembly levers (38) in a position suitable for assembly.

11. Device according to one of Claims 9 or 10, **characterized in that** the assembly unit (20) has means for preferably pneumatically holding the valve spring plate (24) under the abutment means (37) and/or means for preferably pneumatically holding the valve keys (25), in the position suitable for assembly, on the assembly levers (38), in particular valve key receptacles (40) of the latter.

12. Device according to one of Claims 9 to 11, **characterized in that** the valve keys (25) can be supplied individually to the assembly levers (38) and/or to the assembly unit (20), preferably pneumatically and/or under the force of gravity.

13. Device according to one of Claims 9 to 12, **characterized in that** the stop plunger (41) of the assembly unit (20) can be retracted in order to place the valve keys (25) on the valve shank (22), while the assembly unit (20) otherwise maintains its relative position with respect to the valve shank (22), in particular in the longitudinal direction of the latter.

## Revendications

1. Procédé de montage par machine de clavettes de soupape (25) entre une coupelle de ressort de soupape (24) et une tige de soupape (22) d'une soupape (21) d'un moteur à combustion interne, les clavettes de soupape (25) étant amenées à une unité de montage (20) et les clavettes de soupape (25) étant placées par des leviers de montage (38) associés à l'unité de montage (20) dans la position prévue sur la tige de soupape (22), **caractérisé en ce que** la coupelle de ressort de soupape (24) est amenée par l'unité de montage (20) et est montée sur la tige de soupape (22), et **en ce que** lors de l'apport des clavettes de soupape (25), celles-ci s'appuient sur la coupelle de ressort de soupape (24) pour leur positionnement, au moins pour être reprises par les leviers de montage (38).

2. Procédé selon la revendication 1, **caractérisé en ce que** les clavettes de soupape (25) sont positionnées par la coupelle de ressort de soupape (24) par rapport à l'axe longitudinal de la tige de soupape (22) dans une position appropriée pour leur reprise par rapport aux leviers de montage (38).

3. Procédé selon la revendication 1 ou 2, **caractérisé en ce que** la coupelle de ressort de soupape (24) est maintenue par l'unité de montage (20) dans une position relative par rapport à une extrémité libre supérieure (26) de la tige de soupape (22), dans laquelle les clavettes de soupape (25) peuvent être reprises au moins en position correcte par les leviers de montage (38), notamment **en ce que** les clavettes de soupape (25) sont reprises par les leviers de montage (38) lors de leur pose sur la coupelle de ressort de soupape (24).

4. Procédé selon l'une quelconque des revendications précédentes, **caractérisé en ce que** les clavettes de soupape (25) sont reprises dans une position par rapport à l'axe longitudinal de la tige de soupape (22) par les leviers de montage (38), dans laquelle les clavettes de soupape (25) sont montées par les leviers de montage (38) sur la tige de soupape (22).

5. Procédé selon l'une quelconque des revendications précédentes, **caractérisé en ce que** l'unité de montage (20) amène la coupelle de ressort de soupape (24) dans une position le long de la tige de soupape (22) et l'y maintient jusqu'au montage fini des clavettes de soupape (25), les clavettes de soupape (25) étant reprises par les leviers de montage (38) dans cette position en appui contre la coupelle de ressort de soupape (24) et étant appuyées en position correcte contre la tige de soupape (22).

6. Procédé selon l'une quelconque des revendications précédentes, **caractérisé en ce que** la coupelle de ressort de soupape (24) est amenée par l'unité de montage (20) en appui sur la tige de soupape (22), dans la position correcte, par rapport à l'axe longitudinal de la tige de soupape (22), pour permettre aux clavettes de soupape (25) s'appuyant sur la coupelle de ressort de soupape (24) d'être reprises par les leviers de montage (38) et pour permettre aux leviers de montage (38) de placer les clavettes de soupape (25) sur la tige de soupape (22).

7. Procédé selon l'une quelconque des revendications précédentes, **caractérisé en ce qu'** à chaque fois une coupelle de ressort de soupape (24) est prélevée par l'unité de montage (20) depuis un magasin et est maintenue de préférence par une dépression contre un moyen d'appui (37), notamment une surface d'appui (57) de l'unité de montage (20).

8. Procédé selon l'une quelconque des revendications précédentes, **caractérisé en ce qu'**à chaque fois deux clavettes de soupape (25) à monter sont amenées séparément à l'unité de montage (20) et sont amenées dans ce cas dans une position relative par rapport à la tige de soupape (22), les clavettes de soupape (25) reposant sur la coupelle de ressort de soupape (24) étant reprises dans cette position par les leviers de montage (38) et les clavettes de soupape (25) pouvant être placées contre la tige de soupape (22) par déplacement conjoint au moins des extrémités inférieures des leviers de montage (38) retenant les clavettes de soupape (25).

9. Dispositif pour le montage par machine de clavettes de soupape (25) entre des coupelles de ressort de soupape (24) et des tiges de soupapes (22) de soupapes (21) pour des moteurs à combustion interne, comprenant une unité de montage (20); associée à chaque fois à une soupape (21), qui présente un moyen d'appui (37) pour une coupelle de ressort de soupape (24) respective, de préférence une tige poussoir de butée centrale (41) pour l'application contre la tige de soupape (22), et deux leviers de montage (38), le moyen d'appui (37) étant réalisé pour retenir la coupelle de ressort de soupape (24) dans une position définie par rapport aux leviers de montage (38), **caractérisé en ce que** le moyen d'appui (37) et les leviers de montage (38) sont disposés les uns par rapport aux autres dans une position relative fixe dans la direction longitudinale de la tige de soupape (22) telle que les clavettes de soupape (25) reposant sur la coupelle de ressort de soupape (24) retenue par le moyen d'appui (37) puissent être reprises par les leviers de montage (38) et appliquées en position correcte contre la tige de soupape (22).

10. Dispositif selon la revendication 9, **caractérisé en ce que** la tige poussoir de butée (41) est associée à l'unité de montage (20) de telle sorte que lors de l'application de la tige poussoir de butée (41) sur la tige de soupape (22) par le moyen d'appui (37) pour retenir la coupelle de ressort de soupape (24), la coupelle de ressort de soupape (24) soit maintenue dans une position, par rapport à l'axe longitudinal de la tige de soupape (22), dans laquelle les clavettes de soupape (25) reposant sur la coupelle de ressort de soupape (24) puissent être reprises par les leviers de montage (38) dans une position correcte pour le montage.

11. Dispositif selon l'une quelconque des revendications 9 ou 10, **caractérisé en ce que** l'unité de montage (20) présente des moyens pour retenir, de préférence de manière pneumatique, la coupelle de ressort de soupape (24) sous le moyen d'appui (37) et/ou des moyens pour retenir, de préférence de manière pneumatique, les clavettes de soupape (25) dans la position correcte pour le montage sur les leviers de montage (28), notamment des logements (40) de clavettes de soupape de ces leviers.

12. Dispositif selon l'une quelconque des revendications 9 à 11, **caractérisé en ce que** les clavettes de soupape (25) peuvent être amenées séparément aux leviers de montage (38) et/ou à l'unité de montage (20), de préférence de manière pneumatique et/ou sous l'effet de la gravité.

13. Dispositif selon l'une quelconque des revendications 9 à 12, **caractérisé en ce que** la tige poussoir de butée (41) de l'unité de montage (20) peut être ramenée en arrière pour placer les clavettes de soupape (25) contre la tige de soupape (22), tandis que l'unité de montage (20) conserve du reste sa position relative par rapport à la tige de soupape (22), notamment dans la direction longitudinale de la tige de soupape.
